Europäisches Patentamt

(19) European Patent Office

Office européen des brevets

(11) Publication number : **0 133 823**
**B1**

# (12) EUROPEAN PATENT SPECIFICATION

(45) Date of publication of patent specification :
11.11.87

(51) Int. Cl.⁴ : **G 06 F 15/46**, G 05 B 19/417,
**B 31 B 1/74**

(21) Application number : **84305494.1**

(22) Date of filing : **10.08.84**

(54) **Method of controlling tool positions in a corrugated board container making plant.**

(30) Priority : **12.08.83 JP 148279/83**

(43) Date of publication of application :
**06.03.85 Bulletin 85/10**

(45) Publication of the grant of the patent : .
**11.11.87 Bulletin 87/46**

(84) Designated contracting states :
**CH DE FR GB IT LI SE**

(56) References cited :
**EP-A- 0 051 861**
**CH-A- 543 200**
**DE-A- 2 940 492**
**DE-A- 3 125 722**
**US-A- 4 439 834**

(73) Proprietor : **ISOWA INDUSTRY CO. LTD.**
**18 Hohtokucho Kita-ku Nagoya-shi**
**Aichi 462 (JP)**

(72) Inventor : **Adachi, Nokihisa**
**2-109 Myokei-cho**
**Kasugai-shi Aichi-ken (JP)**
Inventor : **Shimura, Naoki**
**164 Horagai 2-chome**
**Midori-ku Nagoya-shi Aichi-ken (JP)**

(74) Representative : **Senior, Alan Murray et al**
**J.A. KEMP & CO 14 South Square Gray's Inn**
**London WC1R 5EU (GB)**

Note : Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid (Art. 99(1)
European patent convention).

## Description

This invention relates to a method of controlling tool positions in a corrugated board container making plant in which delicate adjustments are required for various tools depending on the various conditions such as type and thickness of corrugated boards and type and size of containers to be made from sheet material of such corrugated boards.

In the processing of sheet material of corrugated board, several steps or tools are required to make a final container. These tools may be feeders, printers, slitter-scorers, slotters, folder gluers, and so on. In this specification, however, the term « tool » is used to describe any kind of mechanical control element as well as the noted tools. Each of the tools is threadedly carried on a shaft which in turn is connected to an electrical actuator so that the tool on the shaft can be adjustably positioned for its individual operation. In a typical plant, containers of various shape are made to order, and this factor considerably adds to the adjustment positions in the respective tools as well as the parameters which must be inputted to position the respective tools in conformity with a selected size of container. In a slotter for example, grooving knives have to be positioned to an order specification. Additionally, there are other factors to be considered. In a printer for example, the printing condition varies substantially with the thickness of the printing plate and/or the difference in thickness due to possible wear of the printing plate and hence, printing gaps between pressure rollers must be varied. Further, corrugated boards are classified by the type of flutes forming such boards which may be either A-flute, B-flute or AB-flute according to the Japanese Industrial Standards. In a folder gluer, the position and/or the lateral gaps of folding bars have to be strictly adjusted due to possible variations in thickness of the respective type of flutes. Failure to effect the adjustment will result in differences in dimensions when corrugated board sheets are folded. For these reasons, therefore, with only a uniform calculation formula based on the size of containers, accurate command values for positioning the respective tools were not obtained. Practically, the operator had to position the tools by calculating positioning data and by manually setting the control on the basis of the specification described in the order slip, along with his experience and sense.

CH-A-543 200 and DE-A-3 125 722 show manufacturing equipment where tool positions may be controlled by computer. Information representing the status of the tools may also be fed back to the computer.

In accordance with the present invention as in claim 1 there is provided a method of controlling tool positions in a plant for making corrugated board containers, the plant including tools adjustable in position by a plurality of actuators, according to the specification of a corrugated board container to be made, and control means for controlling the actuators, the method comprising the steps of :

(a) providing a data memory connected to the control means ;

(b) storing in the memory positioning data corresponding to the specification of a particular corrugated board container to be made ;

(c) reading-out from the memory to the control means tool positioning data corresponding to the specifications of the container ;

(d) adjusting respective tool positions by the actuators as a function of data transferred to the control means, and characterised by the further steps of :

(e) manually effecting corrections of the adjusted tool positions ; and

(f) rewriting to the memory data representative of the corrected tool positions.

The present invention also provides apparatus as in claim 4 for manufacturing corrugated board containers which is controlled according to that method.

The invention will now be described by way of example and with reference to the accompanying drawings, in which :

Figure 1 is a symbolic diagram showing the general arrangement of the invention ;

Figure 2 is a schematic diagram showing a preferred embodiment of the invention ; and

Figure 3 is a flow chart of the invention.

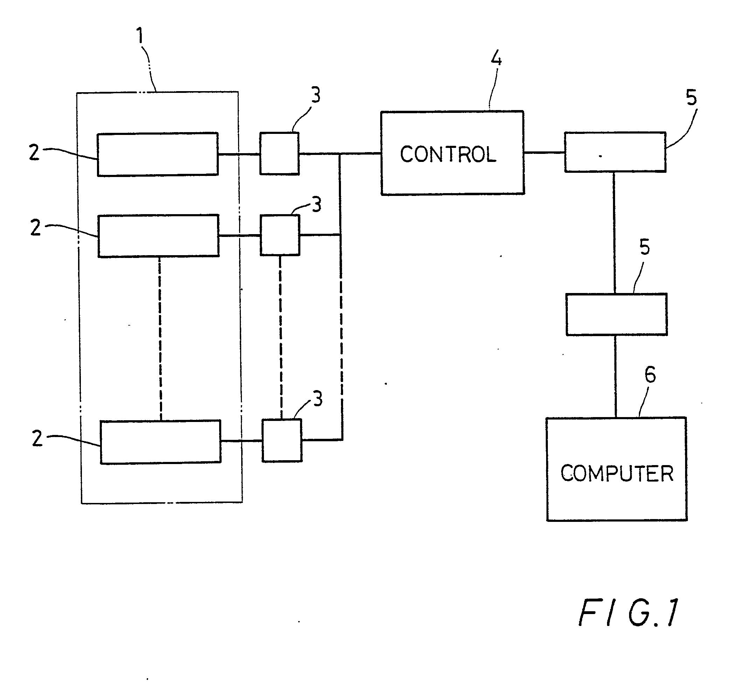

Shown in Fig. 1 is a plant 1 for making corrugated board containers, of the type wherein tool positions 2 are adjusted by a plurality of electric actuators 3 in conformance with the specifications of a corrugated board container to be made. The electric actuators are controlled by an electric control 4 located in the plant. A computer 6 is provided in a suitable environment isolated from the plant, the computer being electrically connected to the electric control 4 in the plant through a communication line 5. Stored in the computer is tool positioning data corresponding to the specifications of a corrugated board container to be made. To manufacture the container the tool positioning data is read out from the computer and the respective tool positions 2 are automatically adjusted by the control 4 on the basis of the data transferred from the computer 6. After the adjusting step, correction of the adjusted tool positions may be effected and the data stored in the computer may be rewritten by the corrected tool positioning data.

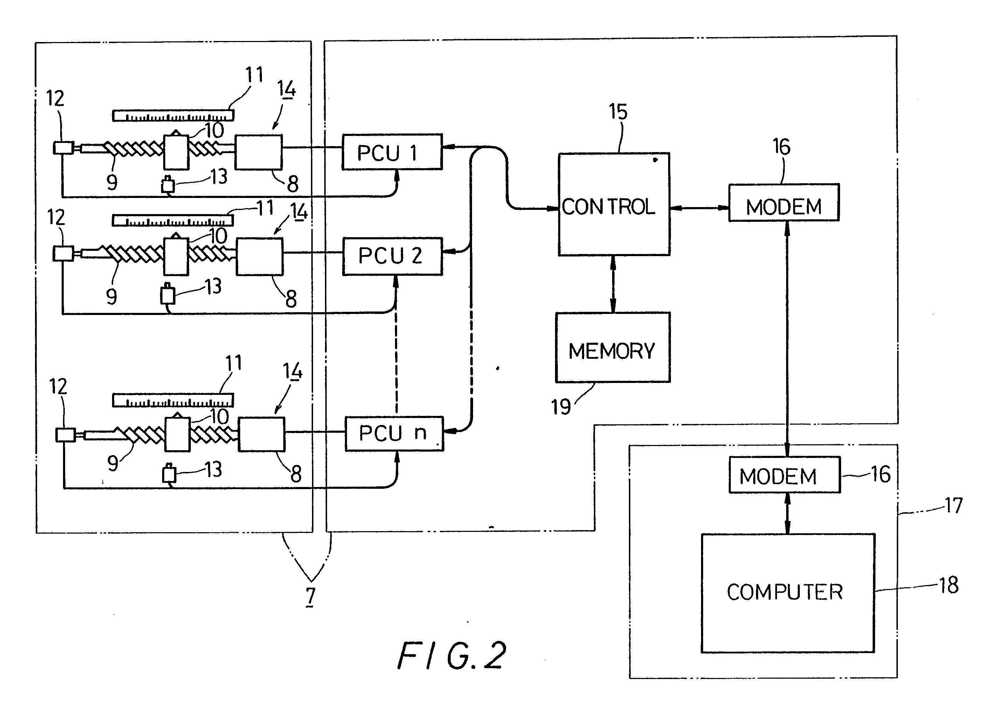

Referring to Figure 2, there is shown in schematic form several components used in conjunction with the present invention. A corrugated board container making plant 7 is shown as comprising a plurality of electric actuators or pulse motors 8 which are controlled by a plurality of tool position control units PCUI-PCUn. Each of the pulse motors 8 is connected to a threaded shaft 9 on which is threadedly carried a tool block 10. Thus, the block 10 is reciprocated through the pulse motor 8 so as to shift its position relative to a scale 11. Reference numeral 12 designates a position sensor or pulse generator which is adapted to sense tool positions. Also, reference numeral 13 designates a proximity switch which is adapted to sense the block 10 being returned to its original position. Thus, all of these components, the tool position control units PCUI-PCUn, pulse motors 8, pulse generators 12 and proximity switches 13, are interrelated to form automatic positioning means 14 for the blocks 10 to which the respective tools are operatively mounted. The tool position control units PCUI-PCUn are connected to a central control 15 with a CRT and a keyboard for transferring tool positioning data in a serial parallel conversion mode. The control 15 is connected on-line with a large computer 18 installed in an optimal environment or office 17 through modems 16 and a communication line.

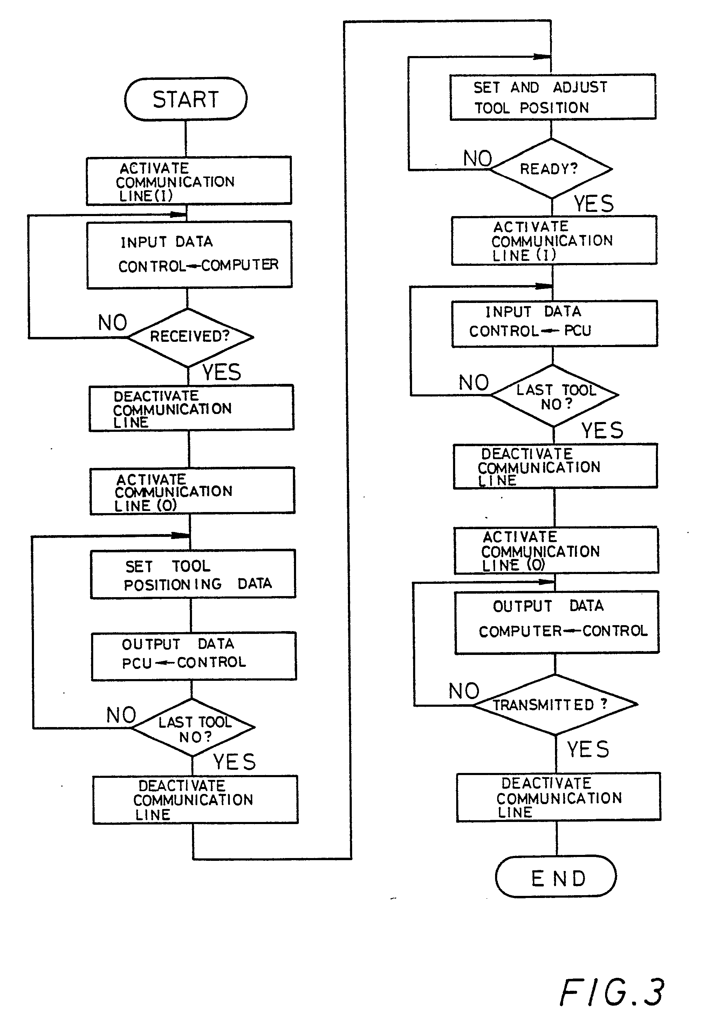

The following operations are performed in the system thus arranged. As shown in Figure 3, to deal with an order of which the tool positioning data have been stored in the computer 18 of the office 17, the communication line is activated from the control 15 side so as to designate the corresponding order number. Then, a corresponding command for adjusting tool positions is transmitted from the computer 17 to the central control 15. After receiving the command, the lines are activated between the control 15 and the tool position control units PCUI-PCUn to transmit the data from the computer 18, so that the tool position control units PCUI-PCUn are operated to adjust the respective tool positions in accordance with the command.

Upon completion of this positioning operation, fine manual adjustments are conducted for the respective tool positions while making a few containers on trial. Thereafter, the lines between the tool position control units PCUI-PCUn and the control 15 is activated to transmit to the control 15 corrected tool positioning data representative of the fine adjustments. Then, the communication line is activated between the control 15 and the computer 18 so as to rewrite the data in the computer 18 on the basis of the corrected tool positioning data.

Thus, in the event that the same order number is used to deal with subsequent orders, only the order number is designated to the computer 18 through the control 15, then, the corrected data previously recorded will be given from the computer 18 as a command. At this time, fine adjustments are not necessary after automatic tool positioning, thereby extremely facilitating tool positioning operation in the shop.

It is to be noted that a large-capacity external memory 19 may be connected to the control 15 and thus, without providing the computer 18, substantially equal effect may be obtained. Further, additional data such as order quantity, production time, and downtime of the machine may be transmitted, at the same time when corrected data is fed back to the computer 18 from the control 15, so that the whole plant may be automated with the optimum efficiency in operation.

**Claims**

1. A method of controlling tool positions in a plant for making corrugated board containers, the plant including tools adjustable in position by a plurality of actuators (3, 8) according to the specification of a corrugated board container to be made, and control means (4, 15) for controlling the actuators (3, 8), the method comprising the steps of :

(a) providing a data memory (19) connected to the control means (4, 15) ;

(b) storing in the memory positioning data corresponding to the specification of a particular corrugated board container to be made ;

(c) reading-out from the memory (19) to the control means (4, 15) tool positioning data corresponding to the specifications of the container ;

(d) adjusting respective tool positions by the actuators (3, 8) as a function of data transferred to the control means (4, 15) ; and characterised by the further steps of :

(e) manually effecting corrections of the adjusted tool positions ; and

(f) rewriting to the memory (19) data representative of the corrected tool positions.

2. A method according to Claim 1, characterised in that the step of manually effecting corrections includes the step of making a number of containers on trial.

3. A method according to Claim 1 or 2 characterised in that the step of rewriting includes the step of transmitting data representative of the corrected tool positions to the control means (15).

4. Apparatus for manufacturing corrugated board containers characterised in that it incorporates the actuators (3, 8), the memory (19) and the control means (4, 15) to control the apparatus according to the method of any one of claims 1 to 3.

**Patentansprüche**

1. Verfahren zur Steuerung von Werkzeugpositionen in einer Anlage zur Herstellung von Wellpappenschachteln, die in der Position durch eine Mehrzahl von Verstellorganen (3, 8) aufgrund der Spezifikation einer herzustellenden Wellpappenschachtel einstellbare Werkzeuge und eine Steuereinrichtung (4, 15) zum Steuern der Verstellorgane (3, 8) aufweist, mit den Schritten :

a) Vorsehen eines mit der Steuereinrichtung (4, 15) verbundenen Datenspeichers (19) ;

b) Speichern von der Spezifikation einer bestimmten herzustellenden Wellpappenschachtel entsprechenden Positionsdaten in dem Speicher ;

c) Auslesen von den Spezifikation des Behälters entsprechenden Werkzeugpositionsdaten von dem Speicher (19) zu der Steuereinrichtung (4, 15) ;

d) Einstellen der entsprechenden Werkzeugpositionen durch die Verstellorgane (3, 8) als Funktion der zu der Steuereinrichtung (4, 15) übertragenen Daten ; gekennzeichnet durch die weiteren Schritte :

e) von Hand Ausführen von Korrekturen der eingestellten Werkzeugpositionen und

f) Wiedereinschreiben von die korrigierten Werkzeugpositionen wiedergebenden Daten in den Speicher (19).

2. Verfahren nach Anspruch 1, dadurch gekennzeichnet, daß der Schritt des von Hand ausführen von Korrekturen den Schritt aufweist des Herstellens einer Zahl von Versuchsbehältern.

3. Verfahren nach Anspruch 1 oder 2, dadurch gekennzeichnet, daß der Schritt des Wiedereinschreibens den Schritt des Übertragens von Daten zu der Steuereinrichtung (15) einschließt, die den korrigierten Werkzeugpositionen entsprechen.

4. Gerät zur Herstellung von Wellpappenschachteln, dadurch gekennzeichnet, daß es die Verstellorgane (3, 8), den Speicher (19) und die Steuereinrichtung (4, 15) zum Steuern des Gerätes beinhaltet nach dem Verfahren nach einem der Ansprüche 1 bis 3.

**Revendications**

1. Procédé de contrôle de la position des outils dans les installations de fabrication de boîtes en carton ondulé, ces installations comportant des outils dont la position peut être réglée à l'aide d'un certain nombre de dispositifs de commande (3, 8) en fonction de la spécification de la boîte à fabriquer, ainsi que des moyens de commande (4, 15) de ces dispositifs (3, 8), le procédé comprenant les opérations suivantes :

(a) la mise à disposition d'une mémoire de données (19) reliée aux moyens de commande (4, 15) ;

(b) le stockage dans la mémoire des données de positionnement relatives à une boîte en carton ondulé donnée ;

(c) la transmission aux moyens de commande (4, 15) des données de positionnement correspondant à la spécification de la boîte lues dans la mémoire (19) ;

(d) le positionnement des outils respectifs par les dispositifs de commande (3, 8) en fonction des données transférées aux moyens de commande (4, 15), ce procédé étant caractérisé par les opérations suivantes :

(e) les corrections manuelles de la position des outils ;

(f) la ré-écriture des données de mémoire (19) représentatives des positions corrigées.

2. Procédé suivant la revendication 1, caractérisé en ce que l'opération de correction manuelle comprend la fabrication d'un certain nombre de boîtes à titre d'essai.

3. Procédé suivant les revendications 1 ou 2, caractérisé en ce que l'opération de ré-écriture comprend la transmission aux moyens de commande (15) des données représentatives des positions corrigées.

4. Equipement pour la fabrication de boîtes en carton ondulé, caractérisé par le fait qu'il comprend les dispositifs de commande (3, 8), la mémoire (19) et les moyens de commande (4, 15) lui permettant de fonctionner suivant un procédé conforme à l'une quelconque des revendications 1 à 3.

FIG.1

1

0 133 823

FIG.2

FIG.3

3